# EUROPÄISCHE PATENTANMELDUNG

(11) **EP 3 096 193 A1**
(43) Veröffentlichungstag der Anmeldung: **23.11.2016**
(21) Anmeldenummer: 16166209.3
(22) Anmeldetag: 20.04.2016
(51) Int. Cl.: G05B 13/02, G05D 1/00

(54) **VERFAHREN UND VORRICHTUNG ZUM PROGNOSTIZIEREN EINER LAGE EINES WASSERFAHRZEUGS**

(30) Priorität: 22.05.2015 DE 102015209470
(71) Anmelder: ROBERT BOSCH GMBH, 70442 Stuttgart (DE)
(72) Erfinder: Guarnizo, Pablo Luis, 70839 Gerlingen (DE); Houis, Nicolas, 74321 Bietigheim-Bissingen (DE)

(57) **Zusammenfassung**

Die Erfindung betrifft ein Verfahren zum Prognostizieren einer zu einem festgelegten Zeitpunkt (T) zu erwartenden Lage eines Wasserfahrzeuges (100) mit den Schritten: Erfassen (S1) von Zustandsgrößen einer Wasseroberfläche in einer Umgebung des Wasserfahrzeuges (100); Prognostizieren (S2) der zu dem festgelegten Zeitpunkt (T) zu erwartenden Lage des Wasserfahrzeuges (100) anhand der erfassten Zustandsgrößen mit Hilfe eines neuronalen Netzwerks; Vergleichen (S3) der prognostizierten Lage des Wasserfahrzeuges (100) mit einer zu dem festgelegten Zeitpunkt (T) erfassten Lage des Wasserfahrzeuges (100); und Anpassen (S4) des neuronalen Netzwerks anhand des Vergleichs.

## Beschreibung

Die vorliegende Erfindung betrifft ein Verfahren und eine Vorrichtung zum Prognostizieren einer Lage eines Wasserfahrzeuges.

### Stand der Technik

Oft ist die Kenntnis einer Lage eines Schiffes auch auf hoher See nötig. Werden beispielsweise Gerätschaften, etwa Blowout Preventers von Ölquellen, zum Meeresgrund herabgelassen, so muss die Bewegung des Schiffes aufgrund des Seegangs einberechnet werden, um eine unkontrollierte Kollision der Gerätschaften mit dem Meeresgrund zu verhindern. Auch bei der Positionierung von schweren Lasten und Gerätschaften, beispielsweise für Windenergieanlagen auf hoher See, ist es nötig, Bewegungen des Schiffes zu kompensieren.

Zur Kompensierung der Schiffsbewegung ist es nötig, die exakte Lage des Schiffes zu kennen. Aus der US 5 916 284 A ist ein Assistenzsystem bekannt, welches erlaubt, anhand von Daten des Schiffes, beispielsweise einer Geschwindigkeit des Schiffes, die Lage des Schiffes vorauszuberechnen.

### Offenbarung der Erfindung

Allgemeiner werden im Folgenden Wasserfahrzeuge betrachtet, worunter insbesondere Schiffe und Boote, aber auch sonstige Schwimmkörper wie Flöße oder Bohrinseln umfasst sein sollen.

Weiter bedeutet der Ausdruck "neuronales Netzwerk" im Folgenden ein künstliches neuronales Netzwerk, worunter computerimplementierte Modelle zu verstehen sind, welche an der Denkweise des Menschen orientiert sind und zur Speicherung und Verarbeitung von Informationen ausgebildet sind. Ein neuronales Netzwerk weist eine Anzahl von Knoten und synaptische Verbindungen zwischen diesen Knoten auf. Jeder synaptischen Verbindung wird ein Gewicht zugewiesen, wobei die Gewichte durch ein Training veränderbar sind. In Abhängigkeit von den Eingangsdaten zeigen die Knoten eine Aktivierung.

Die vorliegende Erfindung offenbart ein Verfahren mit den Merkmalen des Patentanspruchs 1 und eine Vorrichtung mit den Merkmalen des Patentanspruchs 8.

Demgemäß ist ein Verfahren zum Prognostizieren einer zu erwartenden Lage eines Wasserfahrzeuges vorgesehen, mit den Schritten: Erfassen von Zustandsgrößen einer Wasseroberfläche in einer Umgebung des Wasserfahrzeuges; Prognostizieren der zu einem festgelegten Zeitpunkt zu erwartenden Lage des Wasserfahrzeuges anhand der erfassten Zustandsgrößen mit Hilfe eines neuronalen Netzwerks; Erfassen der Lage des Wasserfahrzeuges zu dem festgelegten Zeitpunkt; und Vergleichen der prognostizierten Lage des Wasserfahrzeuges mit der erfassten Lage des Wasserfahrzeuges; und Anpassen des neuronalen Netzwerks anhand des Vergleichs.

Gemäß einem weiteren Aspekt ist eine Vorrichtung für ein Wasserfahrzeug zum Prognostizieren einer zu erwartenden Lage des Wasserfahrzeuges vorgesehen, mit: einer Zustandserfassungseinheit zum Erfassen von Zustandsgrößen einer Wasseroberfläche in einer Umgebung des Wasserfahrzeuges; einer Auswerteeinheit zum Prognostizieren der zu einem festgelegten Zeitpunkt zu erwartenden Lage des Wasserfahrzeuges anhand der von der Zustandserfassungseinheit erfassten Zustandsgrößen der Wasseroberfläche in der Umgebung des Wasserfahrzeuges mit Hilfe eines neuronales Netzwerks, einer Lageerfassungeinheit zum Erfassen der Lage des Wasserfahrzeuges, wobei das neuronale Netzwerk anhand eines Vergleiches der von der Auswerteeinheit prognostizierten Lage des Wasserfahrzeuges mit der zu dem festgelegten Zeitpunkt von der Lageerfassungseinheit erfassten Lage des Wasserfahrzeuges angepasst werden kann.

Bevorzugte Weiterbildungen sind Gegenstand der jeweiligen Unteransprüche.

### Vorteile der Erfindung

Gemäß der vorliegenden Erfindung ist es möglich, einen Wellengang-Operator (response amplitude operator, RAO) zu bestimmen. Der RAO ist hierbei eine Übertragungsfunktion, welche den Zusammenhang zwischen Zustandsgrößen der Wasseroberfläche und der Lage des Wasserfahrzeugs angibt. Durch die Verwendung eines neuronalen Netzwerks ist es möglich, schnell eine Lage des Wasserfahrzeugs vorherzusagen, ohne komplizierte und rechenaufwändige nicht-lineare mathematische Modelle lösen zu müssen. Da das neuronale Netzwerk bei wiederholter Ausführung des Verfahrens angepasst wird und dadurch lernt und trainiert wird, steigt zusätzlich eine Genauigkeit des Verfahrens mit der Zeit an.

Da das Verfahren keine Detailinformationen über das Wasserfahrzeug, beispielsweise Abmessungen der Hülle des Wasserfahrzeugs, eine Massenverteilung des Wasserfahrzeugs oder eine Geschwindigkeit des Wasserfahrzeugs benötigt, ist das erfindungsgemäße Verfahren zur Verwendung mit beliebigen Wasserfahrzeugen einsetzbar. Es können Kosten zur Implementierung von Modellen des Wasserfahrzeugs gespart werden, da eine zusätzliche Anpassung nicht nötig ist.

Aufgrund der Anpassungs- und Lernfähigkeit des neuronalen Netzwerks ist eine zuverlässige Vorhersage einer Lage eines Wasserfahrzeugs auch unter extrem schwierigen Bedingungen, beispielsweise ungleicher Beladung oder großer Wellenhöhe möglich.

Gemäß einer weiteren Ausführungsform des vorliegenden Verfahrens umfassen die Zustandsgrößen der Wasseroberfläche in der Umgebung des Wasserfahrzeuges Wellenerhöhungen und/oder Wellenkomponenten.

Gemäß einer weiteren Ausführungsform des vorliegenden Verfahrens umfassen die Zustandsgrößen der Wasseroberfläche signifikante Wellenerhöhungen und/oder maximale Peakperioden und/oder Wellenkomponentenenergien.

Gemäß einer weiteren Ausführungsform des vorliegenden Verfahrens werden die Zustandsgrößen der Wasseroberfläche über einen Zeitraum hinweg wiederholt erfasst. Durch eine Verwendung eines ausreichend großen Beobachtungszeitraums kann eine Genauigkeit des Verfahrens erhöht werden.

Gemäß einer weiteren Ausführungsform des vorliegenden Verfahrens umfasst das Prognostizieren der zu dem festgelegten Zeitpunkt zu erwartenden Lage des Wasserfahrzeuges: Berechnen von zu dem festgelegten Zeitpunkt zu erwartenden Zustandsgrößen der Wasseroberfläche in der Umgebung des Wasserfahrzeuges anhand der erfassten Zustandsgrößen der Wasseroberfläche in der Umgebung des Wasserfahrzeuges; und Berechnen der zu dem festgelegten Zeitpunkt zu erwartenden Lage des Wasserfahrzeuges mit Hilfe des neuronalen Netzwerks anhand der berechneten Zustandsgrößen der Wasseroberfläche in der Umgebung des Wasserfahrzeuges zu dem festgelegten Zeitpunkt. Durch Bestimmen der Zustandsgrößen der Wasseroberfläche in der Umgebung des Wasserfahrzeugs zu dem festgelegten Zeitpunkt kann ein Zustand der Wasseroberfläche vorhergesagt werden. Mit Hilfe des neuronalen Netzwerks wird dann der Zusammenhang zwischen dem Zustand der Wasseroberfläche und der Lage des Wasserfahrzeugs berechnet.

Gemäß einer weiteren Ausführungsform des vorliegenden Verfahrens wird während des Erfassens von Zustandsgrößen der Wasseroberfläche in der Umgebung des Wasserfahrzeuges zusätzlich eine Lage des Wasserfahrzeuges erfasst; und das Prognostizieren der zu dem festgelegten Zeitpunkt zu erwartenden Lage des Wasserfahrzeuges umfasst: Berechnen der zu dem festgelegten Zeitpunkt zu erwartenden Lage des Wasserfahrzeuges mit Hilfe des neuronalen Netzwerks anhand der erfassten Zustandsgrößen der Wasseroberfläche in der Umgebung des Wasserfahrzeuges und der erfassten Lage des Wasserfahrzeuges. Das neuronale Netzwerk berechnet also eine Lage des Wasserfahrzeugs durch Auswertung der erfassten Lage des Wasserfahrzeugs und der Zustandsgrößen der Wasseroberfläche.

Gemäß einer weiteren Ausführungsform des vorliegenden Verfahrens wird das Verfahren wiederholt durchgeführt wird. Dadurch wird eine Genauigkeit des Verfahrens erhöht, da das Netzwerk bei jedem neuen Durchgang trainiert wird und somit verbessert wird.

Gemäß einer weiteren Ausführungsform der vorliegenden Vorrichtung ist die Auswerteeinheit ausgebildet: zum Berechnen von Zustandsgrößen der Wasseroberfläche in der Umgebung des Wasserfahrzeuges zu dem festgelegten Zeitpunkt anhand der erfassten Zustandsgrößen der Wasseroberfläche in der Umgebung des Wasserfahrzeuges; und zum Berechnen der zu dem festgelegten Zeitpunkt zu erwartenden Lage des Wasserfahrzeuges mit Hilfe des neuronalen Netzwerks anhand der berechneten Zustandsgrößen der Wasseroberfläche in der Umgebung des Wasserfahrzeuges zu dem festgelegten Zeitpunkt.

Gemäß einer weiteren Ausführungsform der vorliegenden Vorrichtung ist die Auswerteeinheit ausgebildet zum Berechnen der zu dem festgelegten Zeitpunkt zu erwartenden Lage des Wasserfahrzeuges mit Hilfe des neuronalen Netzwerks anhand von von der Zustandserfassungseinheit erfassten Zustandsgrößen der Wasseroberfläche in der Umgebung des Wasserfahrzeuges, und der von der Lageerfassungseinheit erfassten Lage des Wasserfahrzeuges.

### Kurze Beschreibung der Zeichnungen

Es zeigen:
- Fig. 1: eine Illustration zur Angabe der Lage eines Wasserfahrzeuges;
- Fig. 2 bis 6: Flussdiagramme zur Erläuterung beispielhafter Ausführungsformen eines Verfahrens zum Prognostizieren einer Lage eines Wasserfahrzeuges; und
- .Fig. 7: ein Blockschaltbild einer beispielhaften Ausführungsform einer Vorrichtung zum Prognostizieren einer Lage eines Wasserfahrzeuges.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

### Beschreibung der Ausführungsbeispiele

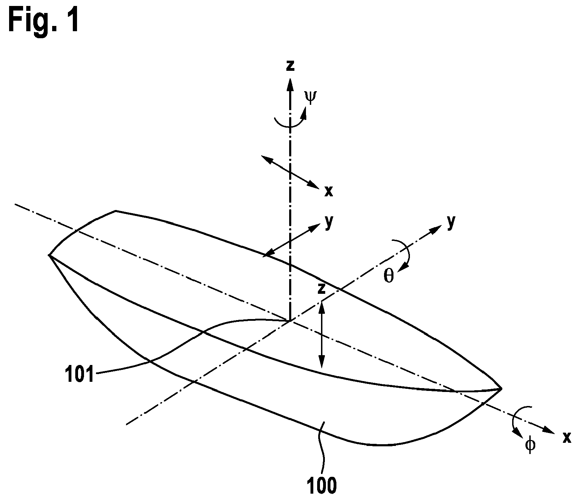

Figur 1 dient der Illustration der Angabe einer Lage eines Wasserfahrzeuges 100. Das Wasserfahrzeug 100 befindet sich auf dem Wasser, beispielsweise auf einem Fluss, einem See oder auf dem Meer. Zur Angabe der Lage wird ein Punkt 101 des Wasserfahrzeuges 100 festgelegt, welcher beispielsweise ein Schwerpunkt des Wasserfahrzeuges 100 sein kann. Die Lage des Wasserfahrzeuges 100 wird nun durch sechs Parameter bestimmt, nämlich einem Gierwinkel □, einem Nickwinkel □ und einem Rollwinkel □, welche jeweils mit Bezug auf körperfeste Achsen des Wasserfahrzeuges 100 definiert sind, sowie durch drei Ortskoordinaten x, y und z des Punkts 101. Diese sechs Parameter werden mit Bezug auf ein (nicht gezeigtes) festes Koordinatensystem definiert. Durch Angabe dieser sechs Parameter ist die Lage des Wasserfahrzeuges 100 genau festgelegt. Gemäß weiteren Beispielen kann eine Lage des Wasserfahrzeugs 100 auch nur eine Erhebung des Wasserfahrzeugs 100, das heißt eine Auslenkung in z-Richtung, umfassen.

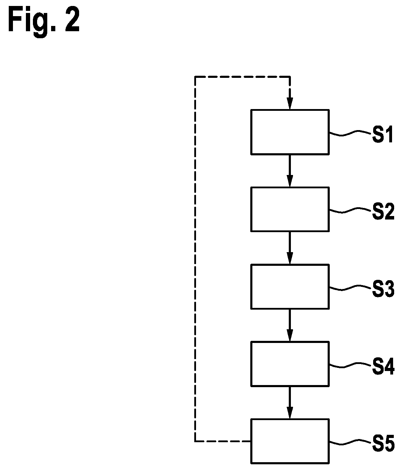

Figur 2 zeigt ein Flussdiagramm zur Erläuterung einer ersten beispielhaften Ausführungsform eines Verfahrens zum Prognostizieren einer zu erwartenden Lage eines Wasserfahrzeugs 100. Das Verfahren umfasst einen ersten Schritt S1 des Erfassens von Zustandsgrößen einer Wasseroberfläche in einer Umgebung des Wasserfahrzeugs 100. Die Umgebung des Wasserfahrzeugs 100 bezeichnet hierbei ein Gebiet um das Wasserfahrzeug 100, beispielsweise ein kreisförmiges Gebiet mit einem Radius, welcher einen Wert im Bereich von einigen Metern bis zu einigen Kilometern, etwa im Bereich von einigen Metern bis zu 5 Kilometern, vorzugsweise einen Wert von etwa 2 Kilometern annimmt. Die erfassten Zustandsgrößen können Wellenerhöhungen H(x, y, t) für Positionen x, y in der Umgebung des Wasserfahrzeugs 100 zu einem bestimmten Zeitpunkt t umfassen. Die Wellenerhöhung H(x, y, t) entspricht hierbei einer Erhebung einer Welle, d.h. der Wasseroberfläche, am Punkt (x, y) in z-Richtung zum Zeitpunkt t.

Die erfassten Zustandsgrößen können auch Wellenkomponenten umfassen, wobei Wellenkomponenten die Fouriertransformierten der Wellenerhöhungen H(x, y, t) bezeichnen. Die Wellenkomponenten umfassen insbesondere Amplituden, Phasen, Frequenzen und Richtungen.

Weiter können die erfassten Zustandsgrößen statistische Variablen umfassen, beispielsweise eine signifikante Wellenhöhe Hₛ, eine maximale Peakperiode Tₚ (maximum peak period) und eine Wellenkomponentenenergie S. Die statistischen Variablen können vorzugsweise in verschiedenen radialen Richtungen in der x-y-Ebene gemessen werden. Die statistischen Variablen geben also für jede radiale Richtung statistische Mittelungen der Wellenkomponenten in dieser radialen Richtung an. Die statistischen Variablen hängen also von der radialen Richtung ab.

Das Erfassen der Zustandsgrößen der Wasseroberfläche wird hierbei durch Abstandsmesseinrichtungen durchgeführt, wie beispielsweise von einem Lidar, einem Ultraschallsensor oder einem Radar, vorzugsweise von einem X-Band-Radar. Das Erfassen von Zustandsgrößen der Wasseroberfläche kann hierbei über eine gewisse Zeitspanne erfolgen, beispielsweise 10 Sekunden, 30 Sekunden, 1 Minute oder 2 Minuten, vorzugsweise 30 Sekunden. In dieser Zeitspanne wird eine Anzahl n von Zeitpunkten T₁, ... Tₙ ausgewählt, welche beispielsweise gleiche Abstände voneinander aufweisen können. Die Anzahl der Zeitpunkte pro Sekunde kann etwa zwischen 0,5 und 100, vorzugsweise zwischen 1 und 5, vorzugsweise 2 sein. Im letzten Fall ist beispielsweise für eine Zeitspanne von 30 Sekunden die Anzahl n gleich 60. Zu jedem dieser Zeitpunkte T₁, ... Tₙ werden die Zustandsgrößen erfasst. Beispielsweise werden Wellenerhöhungen H(x, y, T₁) bis H(x, y, Tₙ) für Positionen x, y in der Umgebung des Wasserfahrzeugs 100 bestimmt.

In einem zweiten Schritt S2 wird eine zu einem festgelegten Zeitpunkt T zu erwartende Lage des Wasserfahrzeugs 100 anhand der erfassten Zustandsgrößen prognostiziert. Der festgelegte Zeitpunkt T liegt später als der letzte Zeitpunkt Tₙ, zu dem die Zustandsgrößen der Wasseroberflächen erfasst wurden. Beispielsweise liegt der festgelegte Zeitpunkt T 10 Sekunden, 60 Sekunden oder 5 Minuten, vorzugsweise 2 Minuten nach dem letzten Zeitpunkt Tn des Erfassens von Zustandsgrößen der Wasseroberfläche.

Anhand der erfassten Zustandsgrößen der Wasseroberfläche werden hierbei Eingangswerte für ein computerimplementiertes neuronales Netzwerk bereitgestellt. Das neuronale Netzwerk kann insbesondere ein Netzwerk mit mehrlagigen Perzeptrons (multi-layer perceptron Netzwerk) mit mehreren versteckten Schichten (hidden layers) umfassen. Das neuronales Netzwerk weist mehrere Knoten sowie synaptische Verbindungen zwischen diesen Knoten auf, wobei jeder synaptischen Verbindung ein Gewicht zugewiesen wird. Die Anfangswerte dieser Gewichte werden randomisiert festgelegt.

Das neuronale Netzwerk erhält nun als Eingabewerte die Zustandsgrößen der Wasseroberfläche, also beispielsweise die Wellenerhöhungen H(x, y, T₁) bis H(x, y, Tₙ) für Positionen x, y in der Umgebung des Wasserfahrzeugs 100. Die Knoten des neuronalen Netzwerks zeigen eine Aktivierung, deren Stärke von den Eingangswerten abhängt. Aus der Aktivierung der Knoten wird nach einem vorgegebenen Algorithmus eine zu dem Zeitpunkt T zu erwartende Lage des Wasserfahrzeugs 100 berechnet, d.h. beispielsweise die Angabe der sechs Parameter, welche die Lage des Wasserfahrzeugs 100 bestimmen oder auch nur die Erhebung des Wasserfahrzeugs 100, d.h. die Auslenkung in z-Richtung.

In einem dritten Schritt S3 wird zu dem festgelegten Zeitpunkt T die Lage des Wasserfahrzeugs 100 erfasst. Die Lage des Wasserfahrzeugs 100 wird hierbei durch eine oder mehrere Lagebestimmungsvorrichtungen an Bord des Wasserfahrzeugs 100 gemessen. Die Lagebestimmungsvorrichtungen können insbesondere Magnetfeldsensoren, Beschleunigungssensoren, Sensoren zur Erkennung von translatorischen Bewegungen und Rotationsbewegungen wie etwa Trägheitsnavigationssysteme (INS), GPS-Geräte und/oder globale-Navigationssatellitensystem (GNSS)-Sensoren umfassen.

In einem vierten Schritt S4 wird die prognostizierte Lage des Wasserfahrzeugs 100 mit der zu dem festgelegten Zeitpunkt T tatsächlich erfassten Lage des Wasserfahrzeugs 100 verglichen. Beispielsweise können die zur Lagebestimmung benötigten sechs Parameter, welche prognostiziert wurden, mit den erfassten sechs Parametern einzeln verglichen werden. Es kann jedoch auch eine Gewichtung über die Parameter stattfinden, beispielsweise die Berechnung einer mittleren quadratischen Abweichung.

In einem fünften Schritt S5 wird anhand des Vergleichs das neuronale Netzwerk angepasst. Das heißt, dass die Gewichte, welche den synaptischen Verbindungen zugewiesen sind, je nach Übereinstimmung der erfassten Lage des Wasserfahrzeugs 100 mit der prognostizierten Lage des Wasserfahrzeugs 100 erhöht oder erniedrigt werden können.

Vorzugsweise wird das Verfahren wiederholt durchgeführt. Dadurch wird eine Übereinstimmung der erfassten Lage des Wasserfahrzeugs 100 mit der prognostizierten Lage des Wasserfahrzeugs 100 erhöht, da die Parameter des neuronalen Netzwerks, das heißt die Gewichte der synaptischen Verbindungen besser angepasst werden. Während die Gewichte des neuronalen Netzwerks in einem ersten Durchlauf zufällig festgelegt wurden, werden die Gewichte nach mehreren Durchläufen verbessert. Das neuronale Netzwerk wird trainiert und "lernt" durch Anpassung der Gewichte. Nach einer kurzen Lernphase ist das neuronale Netzwerk gut angepasst und daher wird sich die Qualität der Prognosen der zu erwartenden Lage des Wasserfahrzeugs verbessern. Des Weiteren kann sich das neuronale Netzwerk schnell auf neue Zustände der Wasseroberfläche einstellen, da in diesem Fall die Gewichte innerhalb kurzer Zeit angepasst werden und wiederum eine gute Qualität der Prognosen gewährleistet ist.

Die Erfindung ist nicht hierauf beschränkt, so kann die von dem neuronalen Netzwerk berechnete Übertragungsfunktion, das heißt der Zusammenhang zwischen Zustandsgrößen der Wasseroberfläche und der Lage des Wasserfahrzeugs angibt, dezentral gespeichert werden, beispielsweise im Internet. Dadurch können weitere Wasserfahrzeuge auf die bereits berechnete Übertragungsfunktion zugreifen.

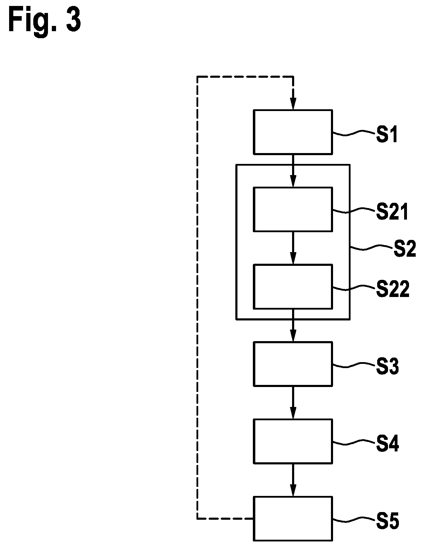

Figur 3 zeigt eine zweite Ausführungsform des erfindungsgemäßen Verfahrens, welche eine Weiterentwicklung der ersten Ausführungsform darstellt. Hierbei umfasst der Schritt des Prognostizierens S2 der zu dem festgelegten Zeitpunkt T zu erwartenden Lage des Wasserfahrzeugs 100 einen ersten Teilschritt S21 des Berechnens von zu dem festgelegten Zeitpunkt T zu erwartenden Zustandsgrößen der Wasseroberfläche in der Umgebung des Wasserfahrzeugs 100. Die Berechnung erfolgt hierbei anhand der erfassten Zustandsgrößen der Wasseroberfläche in der Umgebung des Wasserfahrzeugs 100.

Das Prognostizieren S2 umfasst einen weiteren Teilschritt S22 des Berechnens der zu dem festgelegten Zeitpunkt T zu erwartenden Lage des Wasserfahrzeugs 100. Das Berechnen S22 erfolgt hierbei mit Hilfe des neuronalen Netzwerks anhand der berechneten Zustandsgrößen der Wasseroberfläche in der Umgebung des Wasserfahrzeugs 100. In anderen Worten berechnet das neuronale Netzwerk die Übertragungsfunktion zwischen den Wellenerhöhungen H(x, y, t) und der Lage des Wasserfahrzeugs 100.

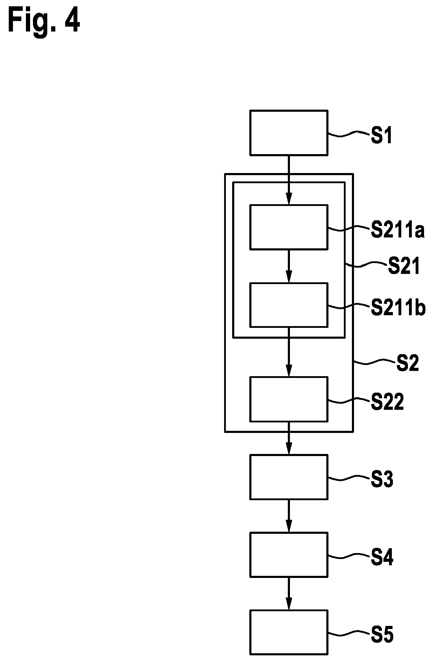

Figur 4 zeigt eine dritte Ausführungsform der vorliegenden Erfindung, basierend auf der zweiten Ausführungsform. Demnach enthält der erste Teilschritt S21 des Berechnens von zu dem festgelegten Zeitpunkt T zu erwartenden Zustandsgrößen der Wasseroberfläche in der Umgebung des Wasserfahrzeugs 100 einen ersten Unterschritt S211a, bei dem die erfassten Wellenerhöhungen H(x, y, T₁) bis H(x, y, Tₙ) fouriertransformiert werden. Dadurch werden die Wellenkomponenten der Wasseroberfläche in der Umgebung des Wasserfahrzeugs 100 berechnet. In einem zweiten Unterschritt S212a werden anhand dieser berechneten Wellenkomponenten Wellenerhöhungen H(x, y, t) zu späteren Zeitpunkten t prognostiziert. Insbesondere werden zu dem festgelegten Zeitpunkt T zu erwartende Wellenerhöhungen H(x, y, T) berechnet. Gemäß der dritten Ausführungsform enthalten die erfassten Zustandsgrößen zusätzlich statistische Variablen, beispielsweise eine signifikante Wellenhöhe Hs, eine maximale Peakperiode Tp und eine Wellenkomponentenenergie S. Die erfassten statistischen Variablen bilden zusammen mit den berechneten zu dem festgelegten Zeitpunkt T zu erwartenden Wellenerhöhungen H(x, y, T) die zu erwartenden Zustandsgrößen der Wasseroberfläche in der Umgebung des Wasserfahrzeugs 100, welche dann wie in der zweiten Ausführungsform zum Berechnens S22 der zu dem festgelegten Zeitpunkt T zu erwartenden Lage des Wasserfahrzeugs 100 verwendet werden.

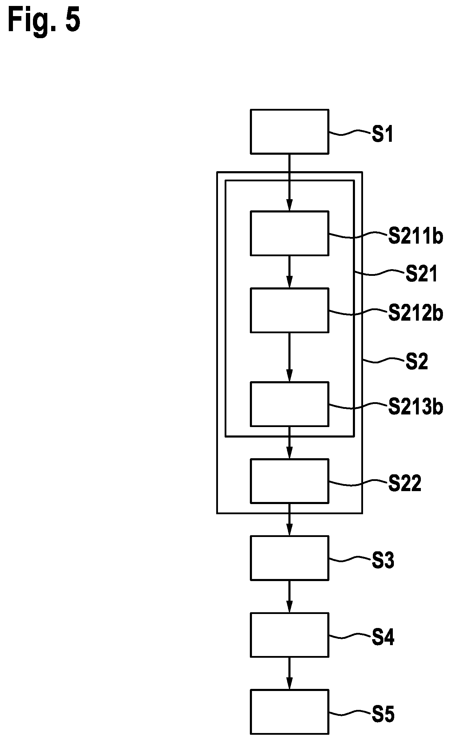

Figur 5 zeigt eine dritte Ausführungsform der vorliegenden Erfindung, basierend auf der zweiten Ausführungsform. Demnach enthält der erste Teilschritt S21 des Berechnens von zu dem festgelegten Zeitpunkt T zu erwartenden Zustandsgrößen der Wasseroberfläche in der Umgebung des Wasserfahrzeugs 100 einen ersten Unterschritt S211b, bei dem die erfassten Wellenerhöhungen H(x, y, T₁) bis H(x, y, Tₙ) fouriertransformiert werden. Dadurch werden die Wellenkomponenten der Wasseroberfläche in der Umgebung des Wasserfahrzeugs 100 berechnet. In einem zweiten Unterschritt S212b werden anhand dieser berechneten Wellenkomponenten Wellenerhöhungen H(x, y, t) zu späteren Zeitpunkten t prognostiziert. Insbesondere werden Wellenerhöhungen H(x, y, T) zu dem festgelegten Zeitpunkt T berechnet. In einem dritten Unterschritt S213b werden diese Wellenerhöhungen H(x, y, T) wiederum fouriertransformiert. Die so erhaltenen prognostizierten Wellenkomponenten zum festgelegten Zeitpunkt T sind die zu erwartenden Zustandsgrößen der Wasseroberfläche in der Umgebung des Wasserfahrzeugs 100, welche dann wie in der zweiten Ausführungsform zum Berechnens S22 der zu dem festgelegten Zeitpunkt T zu erwartenden Lage des Wasserfahrzeugs 100 verwendet werden.

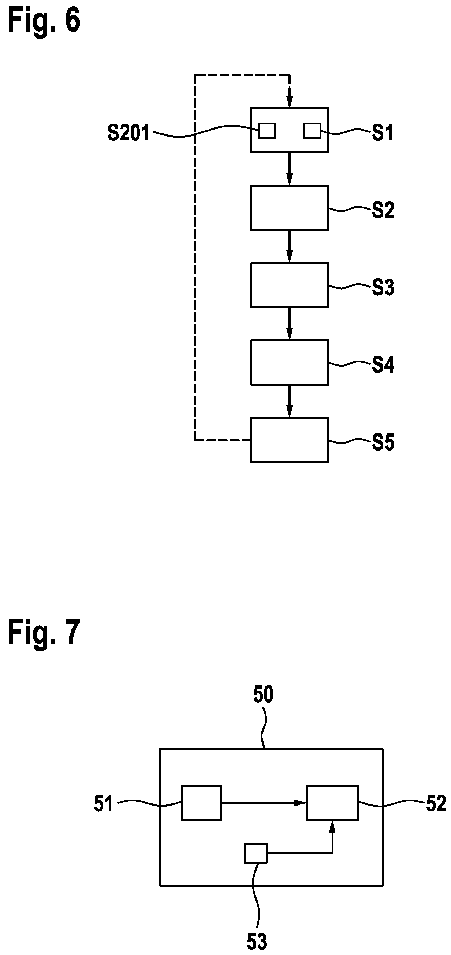

Figur 6 zeigt eine weitere Ausführungsform der vorliegenden Erfindung, welche eine Weiterentwicklung der ersten Ausführungsform wie in Figur 2 gezeigt ist. Hierbei wird zusätzlich zu dem Erfassen der Zustandsgrößen der Wasseroberfläche in der Umgebung des Wasserfahrzeugs 100 auch eine Lage des Wasserfahrzeugs 100 erfasst (S201). Insbesondere wird zu jedem Zeitpunkt T₁ bis Tₙ eine Lage des Wasserfahrzeugs 100 erfasst. Als Eingabewerte für das neuronale Netzwerk dienen gemäß dieser Ausführungsform die Lage des Wasserfahrzeugs 100 zu den Zeitpunkten T₁ bis Tₙ sowie statistische Variablen der Wasseroberfläche, beispielsweise eine signifikante Wellenhöhe Hₛ, eine maximale Peakperiode Tₚ und eine Wellenkomponentenenergie S in mindestens einer radialen Richtung. Das neuronale Netzwerk berechnet die Übertragungsfunktion zwischen diesen Eingabewerten und der Lage des Wasserfahrzeugs 100 zu dem festgelegten Zeitpunkt T.

Figur 7 zeigt eine Vorrichtung 50 für ein Wasserfahrzeug 100 zum Prognostizieren einer zu einem festgelegten Zeitpunkt T zu erwartenden Lage des Wasserfahrzeuges 100. Die Vorrichtung 50 umfasst eine Zustandserfassungseinheit 51, welche ausgebildet ist, Zustandsgrößen einer Wasseroberfläche in einer Umgebung des Wasserfahrzeugs 100 zu erfassen. Die Zustandserfassungseinheit 51 kann hierbei beispielsweise einen X-Band-Radar umfassen. Die Zustandserfassungseinheit 51 kann Wellenerhöhungen H(x, y, t) und/oder statistische Variablen der Wasseroberfläche erfassen, wobei die statistischen Variablen beispielsweise eine signifikante Wellenhöhe Hₛ, eine maximale Peakperiode Tₚ und eine Wellenkomponentenenergie S umfassen.

Zusätzlich umfasst die Vorrichtung 50 eine Auswerteeinheit 52, welche ausgebildet ist, eine zu dem festgelegten Zeitpunkt T zu erwartenden Lage des Wasserfahrzeugs 100 zu prognostizieren. Die Auswerteeinheit 52 umfasst hierbei ein neuronales Netzwerk, welches anhand von Eingangswerten, welche auf den von der Zustandserfassungseinheit einer pünktlich erfassten Zustandsgrößen basierenden Eingangswerten eine zu erwartende Lage des Wasserfahrzeugs 100 berechnet.

Des Weiteren umfasst die Vorrichtung 50 eine Lageerfassungseinheit 53, welche ausgebildet ist, die Lage des Wasserfahrzeugs 100 zu erfassen. Die Parameter des neuronalen Netzwerks, das heißt insbesondere Gewichte von synaptischen Verbindungen des neuronalen Netzwerks werden angepasst durch Vergleichen von der von der Auswerteeinheit 52 prognostizierten Lage des Wasserfahrzeugs 100 mit der zu dem festgelegten Zeitpunkt T von der Lageerfassungseinheit erfassten Lage des Wasserfahrzeugs 100. Dadurch wird das neuronale Netzwerk trainiert und die Vorrichtung verbessert.

## Patentansprüche

1. Verfahren zum Prognostizieren einer zu erwartenden Lage eines Wasserfahrzeuges (100) mit den Schritten:
Erfassen (S1) von Zustandsgrößen einer Wasseroberfläche in einer Umgebung des Wasserfahrzeuges (100);
Prognostizieren (S2) der zu einem festgelegten Zeitpunkt (T) zu erwartenden Lage des Wasserfahrzeuges (100) anhand der erfassten Zustandsgrößen mit Hilfe eines neuronalen Netzwerks;
Erfassen (S3) der Lage des Wasserfahrzeuges (100) zu dem festgelegten Zeitpunkt (T); und
Vergleichen (S4) der prognostizierten Lage des Wasserfahrzeuges (100) mit der erfassten Lage des Wasserfahrzeuges (100); und
Anpassen (S5) des neuronalen Netzwerks anhand des Vergleichs.

2. Verfahren nach Anspruch 1, wobei die Zustandsgrößen der Wasseroberfläche in der Umgebung des Wasserfahrzeuges (100) Wellenerhöhungen (H) und/oder Wellenkomponenten umfassen.

3. Verfahren nach Anspruch 1 oder 2, wobei die Zustandsgrößen der Wasseroberfläche signifikante Wellenerhöhungen (Hₛ) und/oder maximale Peakperioden (Tₚ) und/oder Wellenkomponentenenergien (S) umfassen.

4. Verfahren nach einem der Ansprüche 1 bis 3, wobei die Zustandsgrößen der Wasseroberfläche über einen Zeitraum hinweg wiederholt erfasst werden.

5. Verfahren nach einem der Ansprüche 1 bis 4, wobei das Prognostizieren (S2) der zu dem festgelegten Zeitpunkt (T) zu erwartenden Lage des Wasserfahrzeuges (100) umfasst:
Berechnen (S21) von zu dem festgelegten Zeitpunkt (T) zu erwartenden Zustandsgrößen der Wasseroberfläche in der Umgebung des Wasserfahrzeuges (100) anhand der erfassten Zustandsgrößen der Wasseroberfläche in der Umgebung des Wasserfahrzeuges (100); und
Berechnen (S22) der zu dem festgelegten Zeitpunkt (T) zu erwartenden Lage des Wasserfahrzeuges (100) mit Hilfe des neuronalen Netzwerks anhand der berechneten Zustandsgrößen der Wasseroberfläche in der Umgebung des Wasserfahrzeuges (100) zu dem festgelegten Zeitpunkt (T).

6. Verfahren nach einem der Ansprüche 1 bis 4, wobei
während des Erfassens (S1) von Zustandsgrößen der Wasseroberfläche in der Umgebung des Wasserfahrzeuges (100) zusätzlich eine Lage des Wasserfahrzeuges (100) erfasst wird (S201); und
das Prognostizieren (S2) der zu dem festgelegten Zeitpunkt (T) zu erwartenden Lage des Wasserfahrzeuges (100) umfasst:
Berechnen (S202) der zu dem festgelegten Zeitpunkt (T) zu erwartenden Lage des Wasserfahrzeuges (100) mit Hilfe des neuronalen Netzwerks anhand der erfassten Zustandsgrößen der Wasseroberfläche in der Umgebung des Wasserfahrzeuges (100) und der erfassten Lage des Wasserfahrzeuges (100).

7. Verfahren nach einem der Ansprüche 1 bis 6, wobei das Verfahren wiederholt durchgeführt wird.

8. Vorrichtung (50) für ein Wasserfahrzeug (100) zum Prognostizieren einer zu erwartenden Lage des Wasserfahrzeuges (100) mit:
einer Zustandserfassungseinheit (51) zum Erfassen von Zustandsgrößen einer Wasseroberfläche in einer Umgebung des Wasserfahrzeuges (100);
einer Auswerteeinheit (52) zum Prognostizieren der zu einem festgelegten Zeitpunkt (T) zu erwartenden Lage des Wasserfahrzeuges (100) anhand der von der Zustandserfassungseinheit (51) erfassten Zustandsgrößen der Wasseroberfläche in der Umgebung des Wasserfahrzeuges (100) mit Hilfe eines neuronales Netzwerks, einer Lageerfassungeinheit (53) zum Erfassen der Lage des Wasserfahrzeuges (100), wobei das neuronale Netzwerk anhand eines Vergleiches der von der Auswerteeinheit (52) prognostizierten Lage des Wasserfahrzeuges (100) mit der zu dem festgelegten Zeitpunkt (T) von der Lageerfassungseinheit (53) erfassten Lage des Wasserfahrzeuges (100) angepasst werden kann.

9. Vorrichtung (50) nach Anspruch 8, wobei die Auswerteeinheit (52) ausgebildet ist:
zum Berechnen von Zustandsgrößen der Wasseroberfläche in der Umgebung des Wasserfahrzeuges (100) zu dem festgelegten Zeitpunkt (T) anhand der erfassten Zustandsgrößen der Wasseroberfläche in der Umgebung des Wasserfahrzeuges (100); und
zum Berechnen der zu dem festgelegten Zeitpunkt (T) zu erwartenden Lage des Wasserfahrzeuges (100) mit Hilfe des neuronalen Netzwerks anhand der berechneten Zustandsgrößen der Wasseroberfläche in der Umgebung des Wasserfahrzeuges (100) zu dem festgelegten Zeitpunkt (T).

10. Vorrichtung (50) nach Anspruch 7, wobei
die Auswerteeinheit (52) ausgebildet ist zum Berechnen der zu dem festgelegten Zeitpunkt (T) zu erwartenden Lage des Wasserfahrzeuges (100) mit Hilfe des neuronalen Netzwerks anhand von:
von der Zustandserfassungseinheit (51) erfassten Zustandsgrößen der Wasseroberfläche in der Umgebung des Wasserfahrzeuges (100), und
der von der Lageerfassungseinheit (51) erfassten Lage des Wasserfahrzeuges (100).
